# EUROPEAN PATENT APPLICATION

(11) **EP 3 336 236 A1**
(43) Date of publication of application: **20.06.2018**
(21) Application number: 16834641.9
(22) Date of filing: 09.08.2016
(51) Int. Cl.: D06F 39/00

(54) **METHOD FOR CONTROLLING WASHING MACHINE WITH FUNCTION OF RECYCLING WASHING WATER AND WASHING MACHINE**

(30) Priority: 12.08.2015 CN 201510492806
(71) Applicant: Qingdao Haier Washing Machine Co., Ltd., Qingdao, Shandong 266101 (CN)
(72) Inventor: XU, Sheng, Qingdao Shandong 266101 (CN); DENG, Jinzhu, Qingdao Shandong 266101 (CN); LI, Dong, Qingdao Shandong 266101 (CN); CHE, Min, Qingdao Shandong 266101 (CN)
(74) Representative: Ziebig & Hengelhaupt Patentanwälte PartG mbB
(86) International application number: PCT/CN2016/094134
(87) International publication number: WO 2017/025017

(57) **Abstract**

A control method of the washing machine with the washing water recycling function, the method comprises the following steps: Step 1, after the washing stage of the washing machine, feeding washing water into the flocculation barrel, step 2, stirring, flocculating and standing for layering in the flocculation barrel, step 3, refluxing flocculated clean recycling water into the washing barrel, discharging sewage with residual floe, step 4, feeding the tap water into the washing barrel till reaching the rinsing water level, step 5, performing rinsing. In the step 4, before feeding tap water into the washing barrel, it is determined whether or not the washing water inside the washing barrel reaches the rinsing water level L₄. If yes, executing step 5. If no, executing step 4 until the rinsing water level L₄ is reached. This present disclosure further includes a washing machine, the washing machine adopts the control method to achieve the purpose of recycling washing water. This control method is remarkable in water saving and simple in structure.

## Description

### FIELD OF THE INVENTION

The present disclosure relates to a field of washing machine, and specifically relates to recycling water-saving washing machine, more particularly, to a control method of washing machine with washing water recycling function.

### BACKGROUND OF THE INVENTION

With the improvement of people's living standard, the washing machine has become one of main household appliances in people's daily life. The washing process of the washing machine mainly includes washing, rinsing, and spin-dry stages. In the washing stage, water and detergent are fed into the washing machine to wash clothes. After the rinsing stage begins, more water is needed or more times of rinsing need to be performed, in order to rinse stains and residual detergents, so that a large amount of water resources is consumed. Even if a water-saving barrel washing machine is used, the clothes also needs to be rinsed at least twice to get cleaned, and such a process will at least consume more than 30L of tap water. Sometimes, there are fewer stains on the clothes or fewer detergents are dispensed into, the clothes can be clean after twice-rinsing. However, as the user selects 3-times rinsing, it will definitely cause a waste of water. For example, a 6Kg full automatically washing machine generally consumes about 100L of water for rinsing twice. How to thoroughly wash clothes and save water and electricity at the same time is one of focuses of consumers.

So far, there no water purification and recycling devices that are used in conjunction with household washing machines. Even in the so-called washing machine with a water saving function, a water storage tank is generally mounted on a side of the washing machine, and a water pump is used for injecting water and draining water. Generally, the amount of water can be used for rinsing three times with one injection, so as to save water. However, the water after washing cannot be stored, and the water storage tank makes the structure of the washing machine itself complex and large, which is not conductive to transport, recycling and so on. Thus, due to the restrictions in size, structure, flexibility and other aspects, the original function of the washing machine and the full function of the water storage tank itself are affected. And the water saving efficiency of this scheme is low.

Meanwhile, in order to better save water resources on the basis of the existing laundry methods, the washing water and/or rinsing water is purified by technical means to recycle the water washing stage, so as to achieve the purpose of water saving. Therefore, a flocculation method is adopted for washing water treatment, and uses the treated water for rinsing. The flocculant reacts with stains and detergent contained in washing water to generate the floccus, which precipitates or floats. Thus, it separates the water from the pollutants, to achieve the purpose of purification.

Therefore, a washing machine control method which adopts flocculation treatment to purify washing water and uses the treated water for rinsing is provided, so that the washing and rinsing stages of the washing machine are combined together with the water treatment. Thus, it enables the whole stage of washing and rinsing to be completed with only using one barrel of water. However, in the prior art, there is no similar control method adopted to realize washing water recycling.

In the view of foregoing, the present disclosure is proposed.

### SUMMARY

An object of the present disclosure is to overcome the shortcomings of the prior art, and to provide a control method of washing machine with washing water recycling function. The water flocculation treatment is combined with washing and rinsing of washing machine to form a whole washing process, which washing water can be recycling, and it achieves the purpose of water saving. According to the method, the recycling water in flocculation treatment can be fully purified by adopting a stirring mode.

In order to achieve such object, the technical scheme is adopted by the present disclosure as follows: A control method of the washing machine with the washing water recycling function, comprising the following steps:
Step 1, after the washing stage of the washing machine, feeding washing water into the flocculation barrel,
Step 2, stirring, flocculating and standing for layering in the flocculation barrel,
Step 3, refluxing flocculated clean recycling water into the washing barrel, discharging sewage with residual floe,
Step 4, feeding the tap water into the washing barrel till reaching the rinsing water level,
Step 5, performing rinsing.

Further, firstly, in step 2, the washing water inside the flocculation barrel is stirred for a certain time, the flocculant is dispensed during stirring process so as to carry out flocculation reaction, and the washing water stands for a certain time after the stirring process is finished, so that the floc and water are stratified.

In the present disclosure, tap water is fed into the washing barrel till reaching the rinsing water level, and it is determined whether or not the washing water inside the washing barrel reaches the rinsing water level L4, if yes, executing step 5, if no, executing step 4 until the rinsing water level L4 is reached.

Preferably, only before the first rinsing stage, the water level is determined and water is fed to rinsing water level L₄.

Further, after the execution of step 5 is ended, it is determined whether or not rinsing times reach a preset value, if yes, cleaning flocculation barrel and draining the washing water inside washing barrel; if no, executing step 1.

Further, step 2 comprises the following control steps:
Step 21, determining whether or not the stirring treatment water level L₂ of the flocculation barrel is reached,
   if no, continuing to supply washing water to the flocculation barrel,
   if yes, starting stirring stage, and the stirring stage time is set to be T₁, the flocculant is dispensed after stirring to the time T₂ in the stirring stage;
Step22, executing step 21, meanwhile, determining whether or not the processing water level L₁ of the flocculation barrel is reached,
   if no, continuing to supply washing water to the flocculation barrel,
   if yes, stopping supplying washing water to the flocculation barrel;
Step 23, after step 21 and step 22 are finished, standing flocculation barrel for a set time T₃, and flocculating reactant floating on upper surface of clean recycling water.

Further, treatment water level L₁ is higher than treatment water level L₂, time T₁ is longer than time T₂.

Further, in step 3, a turbidity detection of recycling water is provided before preforming to reflux clean recycling water inside the flocculation barrel to the washing barrel. If the recycling water inside the flocculation barrel reaches the cleaning standard, step 3 is executed, if the recycling water does not satisfy the cleaning standard, all recycling water and flocculating reactant inside the washing barrel and the flocculation barrel are discharged, tap water is supplied to the washing barrel.

Further, when it is the first time that clean recycling water inside the flocculation barrel refluxes to washing barrel in the step 3, it is determined whether or not the flocculation times are reached, if no, executing step 2, if yes, executing step 4.

Further, when the flocculation barrel is controlled to perform step 3 in which clean recycling water refluxes to the washing barrel, it is determined whether or not water level L₃ of the flocculation barrel is reached, if no, it is continued to reflux the water to water level L₃, if yes, stopping reflowing.

Further, before washing machine starts executing washing procedure, the user and/or the washing machine automatically selects washing mode. If user selects normal mode, the washing machine executes a normal washing program, if user selects water saving mode, the washing machine executes procedure according to step 1 to step 5.

Further, the control method includes water-saving washing procedure, after the washing machine starts operating, water-saving mode is set. The amount of clothes is detected; an amount of water intake, an amount of detergent, washing time and other washing parameters are calculated, and washing process is executed based on the amount of calculation, then step 1 is executed.

In the present disclosure, the washing stage, the rinsing stage and flocculation treatment stage of the washing machine are set to be combined together. Washing water are drained into the flocculation barrel after the washing stage is completed, and washing water is simultaneously stirred in the drainage stage The flocculant is dispensed after stirring for a certain time and stirring is continued until the washing water get a fully purification. The treated washing water is refluxed into the washing barrel, and rinsing water level L₄ of the washing barrel is measured. If the rinsing water level is not reached, water is fed in through the inlet valve till reaching the rinsing water level, then rinsing stage is executed. After the rinsing stage is ended, washing water is treated according to the above steps in the flocculation barrel, then the treated water refluxes to the washing barrel till reaching rinsing times and the washing stage completed.

Another object of the present disclosure is provide a washing machine, comprising an outer durm, a washing structure installed inside the outer durm and a recycling water treatment device installed outside the outer durm. The recycling water treatment device includes a flocculation barrel which is used for flocculation treatment on water discharged from the outer durm. The flocculation barrel is provided with a stirring mechiansm for striring water inside the flocculation barrel. The washing machine of the present disclosure adopts the above control method to circulate washing water.

Further, the washing machine includes a main control board, a detergent automatic dispensing device, a water level measuring device and a clothes amount obtaining device. The main control board sets a washing program, the amount of clothes is acquired by clothes amount obtaining device; the amount of washing water, the amount of detergent, washing time and other washing parameters are calculated by the terminal, and starts the washing stage. According to the amount of calculation, detergent is dispensed by the detergent automatic dispensing device, the amount of water intake is measured by the water level measuring device.

Further, the flocculation barrel is provided with a rotating shaft horizontally installed, at least one stirring rod which rotates around the rotating shaft is installed on the rotating shaft, the stirring rod is provided with a stirring blade. The flocculation barrel is provided with a drive motor for driving the rotating shaft to rotate via the belt.

Further, the top of the flocculation barrel is provided with a spray head for water intake flooding into the flocculation barrel. The spray head uniformly sprays water intake to every parts of the side wall of the flocculation barrel, so that all floc attached to the side wall of the flocculation barrel can be effectively self-cleaned by the flow of water intake.

Further, the flocculation barrel is provided with a water inlet, a water outlet and a drain outlet. The water outlet of outer barrel is communicated with the water inlet of the flocculation barrel through a pipeline provided with a first water pump. The water outlet of the flocculation barrel is communicated with the water inlet of the outer barrel through a pipeline provided with a second water pump, so as to form a controllable recycling loop of the washing water between the outer barrel and the flocculation barrel. The drain outlet of the flocculation barrel is communicated with the outside of the washing machine through a pipeline provided with a drainage valve.

Further, the recycling water treatment device further includes a filtering mechanism. Two ends of the filtering mechanism are respectively communicated with the water outlet of the flocculation barrel and the water inlet of the outer barrel, so that floc contained in flocculation water reflux to the outer barrel is separated with clean water, it achieves the purpose of clean water after flocculation treatment refluxing to the outer barrel.

In the present disclosure, a washing machine adopts the above devices, combining the washing stage, rinsing stage and flocculation stage through the above methods, to realize washing water recycling. It finally realizes completing the whole stages of clothes washing and rinsing only by one barrel of water. The present disclosure has advantages of simple structure, remarkable water saving effect and low manufacturing cost.

The following is further described in details with embodiments of the present disclosure.

### BRIEF DESCRIPTION OF THE DRAWINGS

Fig.1: A flow chart of a washing water recycling of an embodiment of the present disclosure;
Fig.2: A flow chart of a washing machine working of an embodiment of the present disclosure;

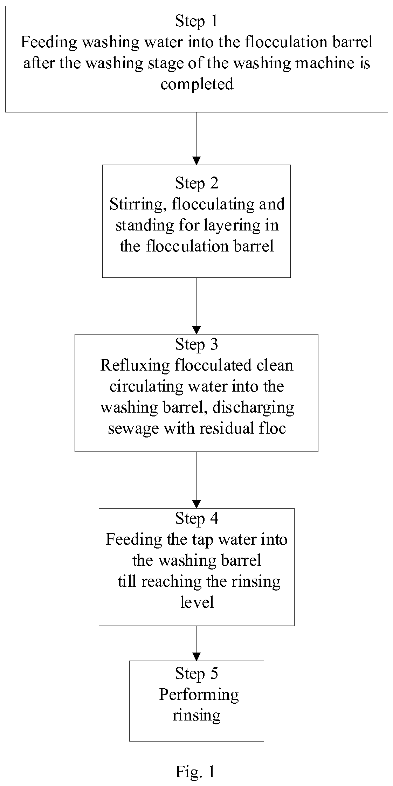

Fig.1: A flow chart of another embodiment of the present disclosure;

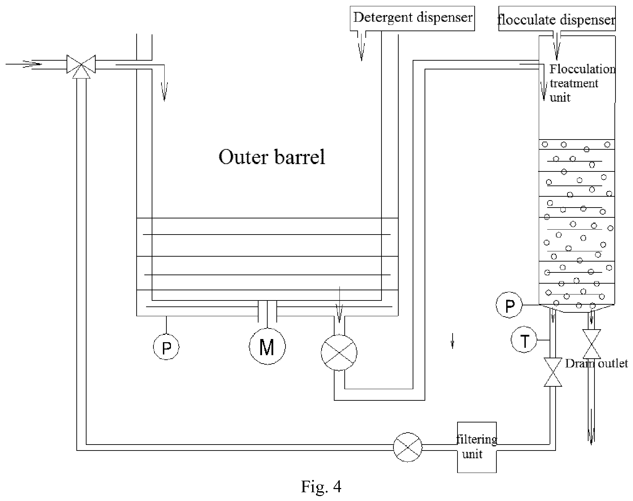

Fig.4: A structural diagram of a washing machine of an embodiment of the present disclosure;

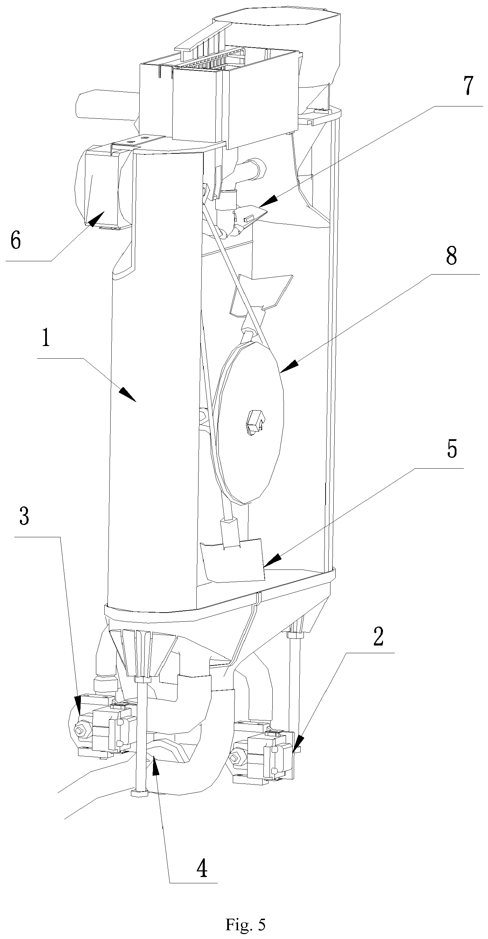

Fig.5: A structural diagram of a water recycling device of an embodiment of the present disclosure;

Wherein: 1. flocculation barrel 2. first water pump 3. second water pump 4. drain valve 5. stirring blade 6. drive motor 7. spray head 8. belt pulley.

### DETAILED DESCRIPTION OF THE EMBODIMENTS

To make the above purposes, features and advantages more clearly understood, specific embodiments of the present disclosure are further described below in detail with reference to the accompanying drawings.

As shown in Fig. 4, the washing machine in the embodiment of the present disclosure includes a conventional washing machine structure within, and a recycling water treatment device. The washing machine structure includes an outer barrel, an inner barrel arranged inside the outer barrel, a door body, a control panel, a water inlet system and a washing motor. The bottom and the top of the outer barrel are respectively connected with the shell framework through dampers and suspension springs. The water inlet system includes a water inlet structure and a detergent automatic dispensing device. The outer barrel is a containing structure for containing the washing water, the inner barrel arranged inside the outer barrel is a laundry structure. The outer barrel is communicated with the water inlet system.

The recycling water treatment device in the embodiment of the present disclosure at least includes a flocculation treatment unit. The flocculation treatment unit includes the flocculation barrel communicated with the outer barrel and a flocculant dispenser which is used to dispense the flocculant into the flocculation barrel. The water is discharged into the flocculation barrel from the outer barrel to be subjected to flocculation treatment.

As shown in Fig. 5, the flocculation barrel is provided with a water inlet, a water outlet and a drain outlet. The water outlet of outer barrel is communicated with the water inlet of the flocculation barrel 1 through a pipeline provided with the first water pump 2. The water outlet of the flocculation barrel 1 is communicated with the water inlet of the outer barrel through a pipeline provided with the second water pump 3, so as to form a controllable recycling loop of the washing water between outer barrel and the flocculation barrel. The drain outlet of the flocculation barrel 1 is communicated with the outside of the washing machine through a pipeline provided with a drainage valve 4.

Preferably, the recycling water treatment device further includes a filtering unit. The filtering unit is used for filtering treated water after the flocculation treatment done by the flocculation treatment unit, thus, the floc and the clean water are separated. The filtering device is not needed to realize the separation of the floc and the clean water. For example, a water level sensor is arranged in the flocculation barrel, so that the liquid level of the flocculation barrel is always kept at a certain height the floc floating on the water surface of the flocculation barrel is always retained in the flocculation barrel. Thus, the purpose of removing the floc contained in the flocculation water is achieved.

In the present disclosure, the flocculation barrel 1 is provided with a water inlet, a water outlet and a drain outlet. The water outlet of the outer barrel is communicated with the water inlet of the flocculation barrel 1 through a pipeline provided with the first water pump 2. The water outlet of the flocculation barrel 1 is communicated with the water inlet of the outer barrel through a pipeline provided with the second water pump 3, so as to form a controllable recycling loop of the washing water between outer barrel and the flocculation barrel 1. The drain outlet of the flocculation barrel 1 is communicated with the outside of the washing machine through a pipeline provided with a drainage valve 4.

In the present disclosure, the flocculation barrel is provided with a stirring device for stirring the water inside the flocculation barrel. The stirring device can be of any structure which be used for stirring water inside the flocculation barrel in the piror art. For example, as shown in Fig. 5, a stirring structure for the flocculation barrel, wherein the stirring structure includes a rotating shaft horizontally installed in the flocculation barrel 1. A belt pulley 8 which is vertically rotating around the rotating shaft is mounted on the rotating shaft. The belt pulley 8 radially extends with a plurality of stirring rods, and stirring blades 5 are respectively mounted on the stirring rods. A drive motor 6 is mounted on the top of the flocculation barrel 1, the drive motor 6 drives the belt pulley 8 to rotate through a belt. Therefore, the water inside the flocculation barrel is stirred, and due to stirring water flow, the floc after dispersing is mixed with water. The water intake flow floods into the flocculation barrel from the spray head 7 mounted on the top of the flocculation barrel.

In the present embodiment, the washing stage, the rinsing stage and the flocculation stage of the washing machine are combined together by the device to form a whole washing procedure and to provide the washing machine with a washing water recycling function.

As shown in Fig. 1, in order to realize the washing water of the washing machine recycling, the present disclosure provides a control method of the washing machine with the washing water recycling function, comprising the following steps:
Step 1, after the washing stage of the washing machine is completed, feeding washing water into the flocculation barrel,
Step 2, stirring, flocculating and standing for layering in the flocculation barrel,
Step 3, refluxing clean recycling water after flocculation into the washing barrel, discharging sewage with residual floe,
Step 4, feeding the tap water into the washing barrel till reaching the rinsing water level,
Step 5, performing rinsing.

It combines the washing stage, the rinsing stage and flocculation stage through the above methods, to realize washing water recycling, it finally realizes completing the whole stage of clothes washing and rinsing only by one barrel of water.

### Embodiment 1

In the present embodiment, in step 4, tap water is fed into the washing barrel till reaching the rinsing water level, and it is determined whether or not the washing water inside the washing barrel reaches the rinsing water level L₄. If yes, executes step 5; if no, executes step 4 until the rinsing water level L₄ is reached.

Preferably, only before the first rinsing stage, the water level is determined and water is fed to rinsing water level L₄.

In the present embodiment, after the execution of step 5 is ended, it is determined whether or not rinsing times reach a preset value. If yes, cleans flocculation barrel and drains the washing water inside washing barrel. If no, executes step 1.

In the present embodiment, only before the first rinsing stage, the water level is determined and water is fed to rinsing water level L₄. It is mainly because a certain amount of water residues exist in the flocculation layer retained in the flocculation barrel, and a certain amount of water residues also exist in the pipeline of the circulation process and filter. So, the amount of water inside the washing barrel is reduced, which may lead to the washing motor being overload and affect its life expectancy. Besides, in the conventional program, the rinsing effect can be improved by using a high water level in the rinsing stage. The rinsing effect of all circulation can be improved only by feeding water once due to circulation, which is the reason why water level determination and water feeding are only carried out in the first rinsing stage.

### Embodiment 2

In the present embodiment, in step 2, a stir in the flocculation barrel is performed firstly, then the flocculant is dispensed and it is continued to stir for a certain time. And the washing water stands for layering after the stirring process is finished.

In the present embodiment, the control steps of step 2 are as following:
Step 21, it is determined whether or not the stirring treatment water level L₂ of the flocculation barrel is reached. If no, it is continued to supply washing water to flocculation barrel. If yes, starts stirring stage, and the stirring stage time is set to be T₁, the flocculant is dispensed after stirring for the time T₂ in the stirring stage.
Step22, executing step 21; meanwhile, it is determined whether or not processing water level L₁ of the flocculation barrel is reached. If no, it is continued to supply washing water to the flocculation barrel. If yes, stops supplying washing water to the flocculation barrel.
Step 23, after the step 21 and step 22 are finished, the flocculation barrel stands for a set time T₃, and flocculating reactant floats on upper surface of clean recycling water.

In the present embodiment, treatment water level L₁ is higher than treatment water level L₂, while water level L₁ and water level L₂ are very close. L1 is full-load water level of the flocculation barrel, L₂ is the water level passes over the stirring device, it prevents empty stirring of the stirring device and prolongs the life expectancy of stirring device. The time T₁ is longer than or equal to the time T₂. T₁ is the time of whole stirring stage. T₂ is the time when the flocculant is dispensed, the time for dispensing the flocculant is extremely short, and after starting stirring process, it only takes a very short time of stirring that T₂ is reached and the flocculant is dispensed.

In the present disclosure, in step 2, the flocculant is dispensed after performing stirring for the time T₂, and continues to stir for a certain time to make sure the flocculant and the washing water are fully contacted and reacted with each other. The water level L₁ is higher than the water level L₂, it enables the washing water be stirred during the washing water floods into the flocculation barrel, thus, to makes sure that the washing water is uniformly mixed for being better in contacting and reacting with the flocculant.

### Embodiment 3

The flocculation barrel of the present embodiment is provided with a detection turbidity detection of recycling water device, which is used for detecting turbidity of the treated recycling water inside the flocculation barrel.

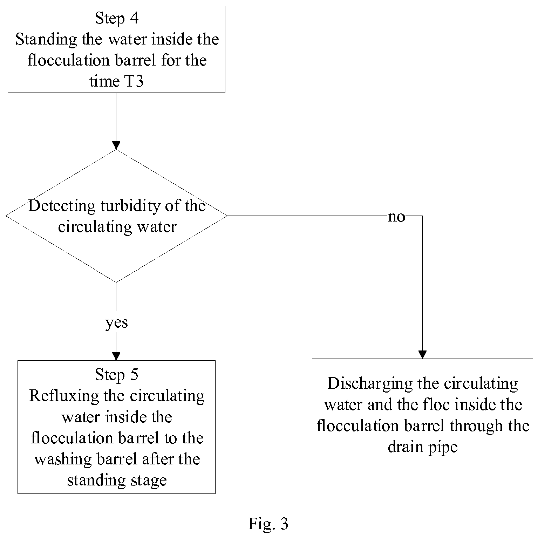

As shown in Fig. 3, in step 3, a turbidity detection of recycling water is provided before refluxes clean recycling water inside the flocculation barrel to the washing barrel. If the recycling water inside the flocculation barrel reaches the cleaning standard, step 3 is executed. If the recycling water doesn't reach the cleaning standard, all recycling water and flocculating reactant inside the washing barrel and the flocculation barrel are discharged through the drain pipe, and tap water is supplied to the washing barrel.

In the present embodiment, the washing machine is provided with several washing modes, and the corresponding amount of the water intake and the parameters of the washing clothes in different modes are different. So the washing machine needs to set different flocculation times correspondingly, to make sure that after the flocculation stage the cleanliness of the washing water inside the water containing cylinder meets the rinsing demand. Therefore, the determination of whether or not the flocculation times are satisfied is added to step 3: when it is the first time that clean recycling water inside the flocculation barrel refluxes to washing barrel in the step 3, it is determined whether or not the flocculation times are reached. If no, it is continued to execute step 2. If yes, executes step 4.

The specific process for determining whether or not the flocculation times reach the standard is as follows:
Step 31, setting a basic flocculation times N₁ according to the amount of the washing water intake and/or the parameters of the washing clothes, detecting the turbidity of the washing water inside the water containing cylinder after the washing program is ended, and setting the variable flocculation times according to the value of turbidity detection.
Step 32, calculating the flocculation times N required for turning the washing water into the rinsing water by the washing machine, which N=N₁+N₂.
Step 33, after execution of step 3 in the embodiment 1, the accumulated value is incremented by 1 to get a result, and comparing the result with the flocculation times N. If the result is smaller than N, executing step 34, if the result reaches N, executing step 35.
Step 34, executing the step 2 in the embodiment 1 again.
Step 35, flocculation treatment is completed, and executing the step 4 in the embodiment 1.

Through the above modes, it enables that the washing machine can preset the flocculation times N of the washing water treated by the flocculation barrel according to the amount of the water intake and/or the parameters of clothes and/or the cleanliness of the washing water. And it is determined whether or not the preset times N are reached before clean recycling water which has been flocculated refluxing into the washing barrel every time, to determine whether or not the flocculation treatment is finished. It ensures that the washing water with different capacities and different cleanliness corresponding to different washing programs can be subjected to flocculation treatment to meet the follow-up rinsing requirements.

Therefore, it ensures the cleanliness of the recycling water from the washing water after flocculation treatment, to avoid the secondary pollution of the washing clothes caused by the refluxing water with relatively high turbidity after flocculation treatment. Then the high cleaning ability during the clothes washing and rinsing stage is guaranteed.

### Embodiment 4

In the present embodiment, when the flocculation barrel executes step 5 in which clean recycling water refluxes to the washing barrel, it is determined whether water level L₃ of the flocculation barrel is reached. If no, it is continued to reflux the water to water level L₃. If yes, stops refluxing. Then the washing barrel is subjected to the rinsing stage, the time of the rinsing stage is set to be T₄. After the rinsing stage is ended, it is determined whether or not rinsing times reach a preset value. If yes, cleans flocculation barrel and drains the washing water inside washing barrel. If no, executes step 1.

In the present embodiment, the water level L₃ is the lowest water level where the water refluxes to the flocculation barrel. The water level is set to ensure all floc inside the flocculation barrel are retained in the flocculation barrel without refluxing to the washing barrel. The time T₄ is the rinsing time which is calculated and set by the washing machine according to the performed washing mode.

In the present embodiment, the washing water inside the washing barrel is drained into the flocculation barrel to flush the flocculation barrel, then discharges from the flocculation barrel. Or, open the inlet valve to inflow water into the flocculation barrel and flush the flocculation barrel and discharge. After the rinsing stage is completed, the flocculation barrel is cleaned in time by the washing water or the re-feed water, it ensures the cleanliness of the inner wall of the flocculation barrel, and prevents bacteria from breeding in the flocculation barrel.

### Embodiment 5

In the present embodiment, during the process of discharging the floc from the flocculation barrel, the water level of the flocculation barrel is firstly measured to determine whether or not the set water level is reached. If no, the water is fed into the floccultion barrel until reaching the set water level. If yes, stir the water in the barrel for a certain time T₅, then the floccultion barrel is subjected to drainage. During the drainage stage, whenever the amount of drainage reaches a multiple of the set Q, the water inside the floccualtion barrel is stirred for a certain time T₆., The water is stirred again when the floc gathers and floats up after draining for a certain period of time by performing the stirring stage at intervals during the drainage stage, so that the floc are always mixed with the water. It prevents the floc from gathering to the surface of the water during the drainage, to improve the cleanliness of the flocculation barrel.

In the present embodimen, whenever the amount of drainage reaches a multiple of the set Q, the water level of the flocculation barrel is detected. When the detection value is 0, the flocculation barrel is emptied, and the self-cleaning process of the flocculation barrel is ended. Otherwise, the stirrring steps are executed. Therefore, it prevents the flocculation barrel from executing stirring steps when the flocculation barrel is emptied, then the water is fed into the flocculation barrel, rinses and discharges.

### Embodiment 6

In the present embodiment, the washing machine includes a main control board, a detergent automatic dispensing device, a water level measuring device and a clothes amount obtaining device. The main control board sets a washing program, the amount of clothes is acquired by clothes amount obtaining device, the amount of washing water, the amount of detergent, washing time and other washing parameters is calculated by the terminal, and starts the washing stage. According to the amount of calculation, detergent is dispensed by the detergent automatic dispensing device, the amount of water intake is measured by the water level measuring device.

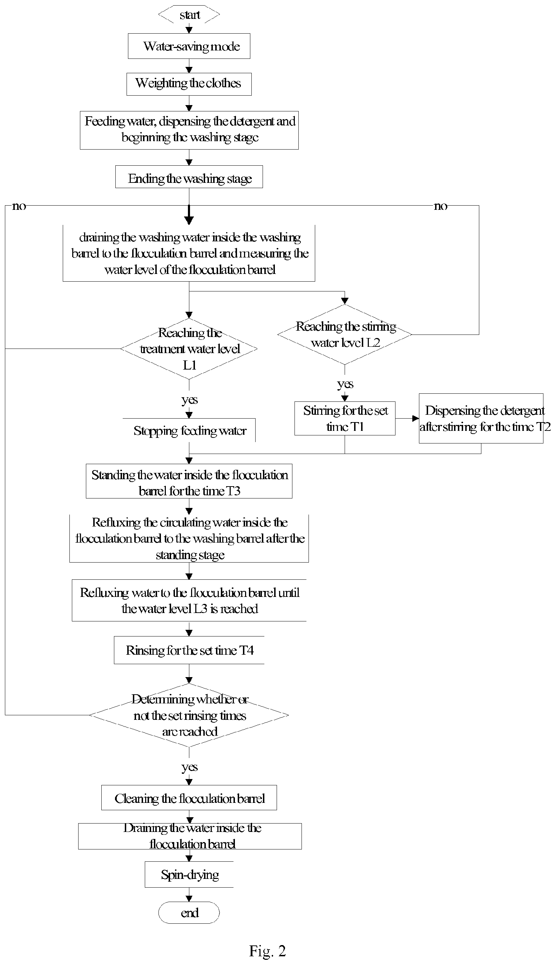

As shown in Fig. 2, after the user puts the clothes on, the power is turned on, and a washing mode is selected. If the user selects the normal mode, the washing machine is subjected to perform the normal washing program.

If the user selects the water-saving mode, the water-saving washing program is performed, the amount of the clothes is detected, the amount of water intake/the target water level and the amount of dispensed detergent is calculated by the main control board of the washing machine according to the result of clothes amount and the program selected by the user (if there is no clothes amount obtaining device in the washing machine, the user can manually select the water level/ the water volume). The washing machine feeds water into the washing barrel via the inlet valve and dispenses the detergent automatically. When the set water level/ the set water volume is reached, the washing stage begins. The washing stage and the conventional stage is the same until the set washing stage is completed. During the process, the main control board calculates the circulation times of the flocculated water and the amount of dispensed detergent during each circulation according to the amount of water intake and the amount of dispensed detergent.

After the washing stage, the washing water is drained from the washing barrel to the flocculation barrel, the water level of the flocculation barrel is continuously measured during the process. When the stirring water level L₂ is reached, the stirring stage starts for a set time T₁, and the flocculant is dispensed after stirring for a time T₂, water is continuously fed to the target treatment water level L₁, then the water feeding stops, where, L₁>L₂, T₂>T₁. After the stirring stage, it begins the standing stage, so that the floc and the treatment water are stratified. After the time T₃, the standing stage is ended, the water after treatment discharges from the bottom and backs to the main barrel by the water pump. When the measure value of the water level reaches the L₃, the drainage stage is ended, L₃ is a set value, so that the water after treatment returns to the washing barrel as much as possible and the flocculation layer remains in the flocculation barrel, then the washing machine begins rinsing.

A water feeding stage is added between the finish of water returning and the beginning of the rinsing, the target water level of the water feeding is consistent with the rinsing water level of conventional program. After the rinsing stage, the counting starts and next cycle begins until the counting value reaches the set value that is it reaches the set rinsing times. After rinsing stage, the washing water is drained and the flocculation barrel is cleaned. After the drainage stage, according to the program selected by the user, the following dehydration and/or drying are executed.

The flocculation barrel cleaning stage is performed, when the cleaning stage is ended, the drainage stage and spin-drying stage is performed until the end.

In summary, the present disclosure sets to combine the washing stage, rinsing stage and the flocculation treatment stage of the washing machine. After the washing stage, the washing water floods into the flocculation barrel, the washing water is simultaneously stirred during the drainage stage, the flocculant is dispensed after stirring for a certain time. And stirring is continued until the washing water get a fully purification, the treated washing water refluxes into the washing barrel, and the rinsing water level of the washing barrel is measured. If the rinsing water level is not reached, water floods in through the inlet valve till reaching rinsing water level, then rinsing stage is executed. After the rinsing stage is ended, washing water floods into the flocculation barrel and is treated according to the above steps, refluxes to the washing barrel till reaching rinsing times and washing stage finishes.

While there has been shown several and alternate embodiments of the present disclosure, it is to be understood that various of variants and improvement can be made as would known to one skilled in the art without departing from the underlying scope of the present invention as is discussed and set forth above and below including claims.

## Claims

1. A control method of a washing machine with a washing water recycling function comprising the following steps:
Step 1, feeding washing water into a flocculation barrel after a washing stage of the washing machine is completed,
Step 2, stirring, flocculating and standing for layering in the flocculation barrel,
Step 3, refluxing clean recycling water after flocculating into a washing barrel, discharging sewage with residual floc,
Step 4, feeding tap water into the washing barrel till reaching a rinsing water level,
Step 5, performing rinsing.

2. The control method of the washing machine with the washing water recycling function according to claim 1, wherein: firstly, in step 2, the washing water inside the flocculation barrel is stirred for a certain time,
a flocculant is dispensed during a stirring process so as to carry out flocculation reaction, and
the washing water stands for a certain time after the stirring process is finished, and floc and water are stratified.

3. The control method of the washing machine with the washing water recycling function according to claim 1, wherein: after an execution of step 5 is ended, it is determined whether or not a rinsing times reach a preset value,
if yes, cleaning the flocculation barrel and draining the washing water inside the washing barrel,
if no, executing step 1.

4. The control method of the washing machine with the washing water recycling function according to claim 1 or 2, wherein: step 2 comprises following control steps:
Step 21, determining whether or not a stirring treatment water level L₂ of the flocculation barrel is reached,
if no, continuing to feed washing water to the flocculation barrel,
if yes, starting a stirring stage, and a time of the stirring stage is set to be T₁, the flocculant is dispensed after stirring for a time T₂ in the stirring stage,
Step22, in executing step 21, determining whether or not treatment water level L₁ of the flocculation barrel is reached,
if no, continuing to feed washing water to the flocculation barrel,
if yes, stopping feeding washing water to the flocculation barrel,
Step 23, after step 21 and step 22 are finished, standing the flocculation barrel for a set time T₃, the floc floating on an upper surface of the clean recycling water.

5. The control method of the washing machine with the washing water recycling function according to claim 4, wherein: the treatment water level L₁ is higher than the stirring treatment water level L₂.

6. The control method of the washing machine with the washing water recycling function according to claim 1, wherein: in step 3, a turbidity detection of recycling water is provided before refluxing the clean recycling water inside the flocculation barrel to the washing barrel is preformed,
if the recycling water inside the flocculation barrel reaches a cleaning standard, step 3 is executed,
if the recycling water doesn't reach the cleaning standard, the recycling water and the floc inside both the washing barrel and the flocculation barrel are discharged, and tap water is fed to the washing barrel.

7. The control method of the washing machine with the washing water recycling function according to claim 1, wherein: in step 3, it is determined whether or not a flocculation times is reached when the clean recycling water inside the flocculation barrel refluxes to washing barrel for a first time, ,
if no, continuing executing step 2,
if yes, executing step 4.

8. The control method of the washing machine with the washing water recycling function according to claim 1, wherein: in step 3, it is determined whether or not water level L₃ of the flocculation barrel is reached when a process of the clean recycling water refluxing to the washing barrel is performed in the flocculation barrel, ,
if no, continuing refluxing to the water level L₃,
if yes, stopping refluxing.

9. The control method of the washing machine with the washing water recycling function according to any of claims from 1 to 8, wherein: before the washing machine starts executing a washing procedure, a user selects and/or the washing machine automatically selects a washing mode,
if the user selects a normal mode, the washing machine executes a normal washing procedure,
if the user selects a water saving mode, the washing machine executes following step 1 to 5 in order.

10. A washing machine, comprising an outer durm, a washing structure installed inside the outer durm and a recycling water treatment device installed outside the outer durm, wherein,
the recycling water treatment device includes a flocculation barrel which is used for flocculation treatment on water discharged from the outer durm,
the flocculation barrel is provided with a stirring mechiansm for striring water inside the flocculation barrel,
the washing machine adoptes the control method according to any one of claims from 1 to 9 to recycle washing water.
